# EUROPÄISCHE PATENTSCHRIFT

(11) **EP 0 569 059 B1**
(45) Veröffentlichungstag und Bekanntmachung des Hinweises auf die Patenterteilung: **20.11.1996**
(21) Anmeldenummer: 93112672.6
(22) Anmeldetag: 21.02.1990
(51) Int. Cl.: F16B 45/02

(54) **Karabinerhaken**
Snap hook
Mousqueton

(43) Veröffentlichungstag der Anmeldung: 10.11.1993
(62) Teilanmeldung aus: 90903296.3
(73) Patentinhaber: STUBAI- WERKZEUGINDUSTRIE REGISTRIERTE GENOSSENSCHAFT MIT BESCHRÄNKTER HAFTUNG, A-6166 Fulpmes (AT)
(72) Erfinder: Hörtnagl, Johann, A-6166 Fulpmes (AT)
(74) Vertreter: Hofinger, Engelbert, DDr.

(56) Entgegenhaltungen:
- FR-A- 2 442 996
- FR-A- 2 582 223
- US-A- 2 098 466

## Beschreibung

Die Erfindung betrifft einen Karabinerhaken mit einem eine Einführöffnung aufweisenden Bügel und mit einem die Öffnung übergreifenden Verschlußteil, der gegen eine Rückstellfeder an einem ersten Ende des Bügels nach innen schwenkbar gelagert ist und im zweiten Ende des Bügels einliegt, wobei das zweite Ende des Bügels mit einem in der Bügelebene liegenden Mittelsteg und an den beiden Seiten mit je einer Ausnehmung versehen ist, und wobei der Einliegebereich des Verschlußteiles mit den Ausnehmungen entsprechenden Seitenstegen und einer dem Mittelsteg entsprechenden Längsnut versehen ist.

Ein derartiger Karabinerhaken ist beispielsweise der FR-A 2,442,996 zu entnehmen. Der Mittelsteg weist eine nach innen offene Nut für einen die Seitenstege des Verschlußteiles verbindenden Querstift auf. Die ins Bügelinnere offene Nut bewirkt eine durch Kanten unterbrochene innere Bügelfläche, sodaß das Ein- und Ausführen des Seiles oder Gurtbandes erschwert ist. Auf dem Verschlußteil ist bevorzugt eine Hülse angeordnet, die über den Einlagebereich geschoben werden kann, um das unbeabsichtite Öffnen zu vermeiden.

Aus der EP-B 289 490 ist ein Karabinerhaken bekannt geworden, bei dem das freie Ende des Verschlußteiles und das zugehörige Bügelende einen T-förmigen Eingriffsteil und eine etwas größere T-förmige Aufnahme aufweisen. Hier sind weitgehend kantenfreie Flächen gegeben, sodaß ein Seil oder Gurtband bei Ein- und Ausführen nicht hängen bleiben kann. Bei Zugbelastung ist aber der Halt der ineinandergreifenden Teile begrenzt, da sich die den T-förmigen Eingriffsteil umgreifenden Seitenstege der Aufnahme nicht verhaken, sondern nach außen aufbiegen können.

Die Erfindung hat es sich nun zur Aufgabe gestellt, einen Karabiner zu schaffen, dessen zweites Bügelende und dessen dort einliegendes Vorderende des Verschlußteiles bei hoher Zugbelastung ineinander verhaken, um eine plastische Verformung des Bügels zu vermeiden, wobei aber das zweite Bügelende möglichst gerundete, das Ein- und Ausführen des Seiles, Gurtbandes oder dergleichen nicht behindernde Außenflächen aufweisen soll.

Erfindungsgemäß ist hiezu vorgesehen, daß das zweite Ende des Bügels nach innen abgeschrägt ist und daß der Einliegebereich des Verschlußteiles eine dem Mittelsteg entsprechende, schräge Längsnut und den Ausnehmungen entsprechende Endhaken aufweist, die durch eine Quernut vom Rest des Verschlußteiles getrennt sind, wobei in unbelastetem Zustand zwischen dem zweiten Ende des Bügels und dem Einliegebereich des Verschlußteiles ausreichend Spiel ist, um das Verschwenken des Verschlußteiles sicherzustellen. Im zweiten Bügelende sind somit zwar Ausnehmungen vorgesehen, die der Verhakung des Einliegebereiches des Verschlußteiles dienen, wobei aber durch die Ausbildung des Mittelsteges alle mit dem Seil oder dem Gurtband in Berührung kommenden Flächen gerundet und kantenfrei sind.

Insbesondere für Gleitschirme und Hängegleiter, deren Karabinerhaken Gurtbänder aufnehmen, ist in einer weiteren bevorzugten Ausführung vorgesehen, daß der Karabinerhaken eine annähernd trapezförmige Form aufweist, in der der Verschlußteil einen Seitenschenkel darstellt, wobei das erste Bügelende vom Deckschenkel heruntergebogen ist. Da in einer derartigen Ausführung auf den Grund- und auf den Deckschenkel größere Hebelkräfte einwirken, kann es einerseits zweckmäßig sein, die beiden Schenkel jeweils ins Bügelinnere geringfügig auszubiegen, und andererseits den dem Verschlußteil gegenüberliegenden Seitenschenkel in der Bügelebene zu verbreitern und ihn gegebenenfalls auch abzuflachen.

Nachstehend wird nun die Erfindung anhand der Figuren der beiliegenden Zeichnungen näher beschrieben. Es zeigen:
- Fig. 1: einen Karabinerhaken in Schließstellung mit teilgeschnittenem Verschlußteil,
- Fig. 2: den Karabinerhaken in Offenstellung, und
- Fig. 3: einen Schritt nach der Linie III-III in Fig.1.

Ein Karabinerhaken weist einen offenen Bügel 1 auf, dessen Öffnung mittels eines schwenkbaren Verschlußteiles 5 verschlossen bzw. verschließbar ist. Der Karabinerhaken besitzt die Form eines Trapezes, wobei der Verschlußteil 5 einen Seitenschenkel bildet, und dessen Schwenkachse an einem ersten Ende 6 des Bügels 1 vorgesehen ist, das vom Grundschenkel 4 hochgebogen ist. Das einen Einliegebereich 26 des Verschlußteiles 5 aufnehmende zweite Ende 7 des Bügels 1 ist vom Deckschenkel 3 hinuntergebogen, wobei das zweite Bügelende 7 und der Einliegebereich 26 des Verschlußteiles 5 so ausgebildet sind, daß bei hoher Zugbelastung, insbesondere Zugüberbelastung ein Formschluß wirksam wird. Hiezu ist das zweite Bügelende 7, das zum leichteren Einführen eines Gurtbandes oder Seiles nach innen abgeschrägt ist und gerundete möglichst hindernisfreie Flächen aufweist, mit zwei Ausnehmungen 17 versehen, die symmetrisch zur Bügelebene beiderseits eines Mittelsteges 19 ausgebildet sind. Die Seitenwände der Ausnehmungen 17 verlaufen etwa U-förmig, wobei die der Bügelöffnung nähere Seitenwand eine hintergreifbare Ausnehmung 25 aufweist. Der Einliegebereich 26 des Verschlußteiles 5 weist eine dem Mittelsteg 19 entsprechende, schräg verlaufende Längsnut 23 und eine Quernut 24 auf, sodaß Endhaken 18 gebildet sind, die den Ausnehmungen 17 entsprechen. Die Endhaken 18 weisen dabei eine zur Ausnehmung 25 weisende Ausbuchtung auf, die erst bei hoher Zugbelastung in Eingriff kommen.

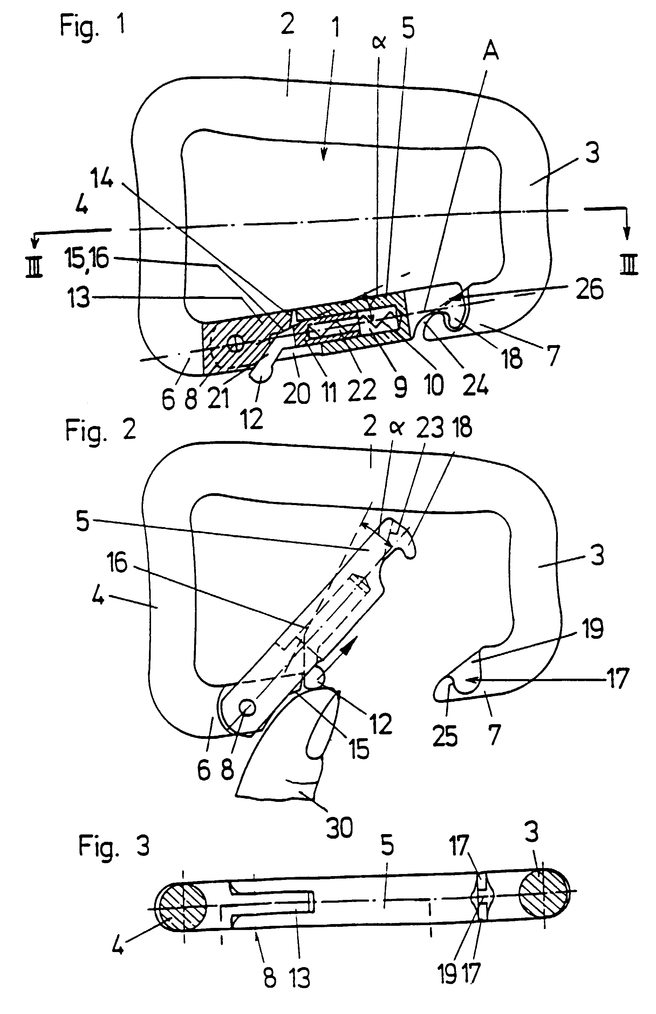

Um möglichst hohe Zugkräfte aufnehmen zu können, ohne bereits den Eingriff der Endhaken 18 zu bewirken, sind der Grundschenkel 4 und der Deckschenkel 3 jeweils nach innen ausgebogen, wie besonders aus der Schnittdarstellung der Fig. 3 sichtbar ist, und der dem Verschlußteil 5 gegenüberliegende Seitenschenkel 2 in der Bügelebene verbreitet und zusätzlich abgeflacht, sodaß dessen Querschnitt annähernd oval ist.

Am ersten Bügelende 6 ist ein Mittelsteg 13 vorgesehen, der eine Schwenkachse 8 aufnimmt. Auf dieser ist der Verschlußteil 5 schwenkbar gelagert, dessen lagerseitiges Ende einen sich in der Bügelebene erstreckenden Längsschlitz 20 aufweist, sodaß die beiden Außenstege von der Schwenkachse 8 durchsetzt werden. Ausgehend vom Längsschlitz 20 ist eine zentrale Bohrung 9 im Verschlußteil 5 vorgesehen, an deren Boden sich eine als Rückstellfeder 10 wirkende Druckfeder abstützt. In der Bohrung 9 ist ein Sperrschieber 11 verschiebbar, der ebenfalls eine Bohrung 22 aufweist, an deren Boden das zweite Ende der Rückstellfeder 10 anliegt. Der Sperrschieber 11 ist am schwenklagerseitigen Ende mit einem schräg durch den Längsschlitz 20 nach hinten außen führenden Schenkel 21 versehen, der in einem an der Außenseite des Verschlußteiles 5 und damit an der Außenseite des Karabinerhakens zugänglichen Betätigungsgriff 12 endet. Der Schenkel 21 erstreckt sich in einem Winkel von etwa 45° zur Längsachse A bzw. Bohrung 9 des Verschlußteiles 5. Der Mittelsteg 13 erstreckt sich an der Bügel innenseite in Längsrichtung weiter über die Schwenkachse 8 hinaus als an der Außenseite, an der der Verschieberaum für den Schenkel 21 des Sperrschiebers 11 ausgespart ist. Die Stirnfläche des Mittelsteges 13 ist leicht konvex gekrümmt und liegt etwa in dem Kreisbogen, der durch die Außenlinie des vom Grundschenkel 4 hochgebogenen ersten Bügelendes 6 gegeben ist, sodaß die Stirnfläche eine zur Schwenkachse 8 exzentrische Fläche 14 bildet. Diese geht etwa mittig in eine Rastfläche 15 über, die sich in einem selbsthemmenden Winkel α zur Längsachse A des Verschlußteiles 5 in Schließstellung erstreckt. Der Winkel α beträgt dabei bevorzugt etwa 15°. An das der Schwenkachse 8 nähere Ende der Rastfläche 15 schließt ein weiterer Flächenabschnitt der Stirnfläche des Mittelsteges 13 an, der etwa unter 45° und in Schließstellung parallel zum Schenkel 21 des Sperrschiebers 11 verläuft. Gegengleich zur Rastfläche 15 weist der Sperrschieber 11 an der ins Bügel innere weisenden Seite im Übergangsbereich zwischen dem in der Bohrung 9 verschiebbaren Teil und dem herausführenden Schenkel 21 eine Sperrfläche 16 auf. In der in Fig. 1 gezeigten Schließstellung des Verschlußteiles 5 preßt sich die Sperrfläche 16 gegen die Rastfläche 15, sodaß aufgrund des selbsthemmenden Winkels α die Verschwenkung des Verschlußteiles 5 gesperrt ist. Wird der Sperrschieber 11 mittels des außenseitigen Betätigungsgriffes 12 in Längsrichtung verschoben, so würde sich die Sperrfläche 16 von der Rastfläche 15 lösen. Da jedoch die Krafteinleitung schräg von außen erfolgt, findet gleichzeitig bereits eine angepaßte Schwenkbewegung statt, sodaß die Sperrfläche 16 entlang der Rastfläche 15 bis zum Übergang zur exzentrischen Fläche 14 gleitet. Von diesem Moment an gleitet die innere Fläche des Schenkels 21 entlang der exzentrischen Fläche 14 weiter, sodaß auch während der weiteren Schwenkbewegung des Verschlußteiles 5 der Sperrschieber 11 unter Kompression der Rückstellfeder 10 erfolgt, wobei die auf dem Betätigungsgriff 12 auszuübende Kraft trotz Erhöhung der Kompression geringer wird. Der beispielsweise mit dem Daumen 30 (Fig. 2) verschiebbare Betätigungsgriff 12 bewegt sich dank des Zusammenspiels der ervähnten Flächen annähernd entlang des Kreisbogens, dessen Mittelpunkt innerhalb des hochgebogenen ersten Bügelendes liegt, woraus sich ein äußerst harmonischer, entlang des Kreisbogens abwälzender Bewegungsablauf ergibt.

## Patentansprüche

1. Karabinerhaken mit einem eine Einführöffnung aufweisenden Bügel (1) und mit einem die Öffnung übergreifenden Verschlußteil (5), der gegen eine Rückstellfeder an einem ersten Ende (6) des Bügels (1) nach innen schwenkbar gelagert ist und im zweiten Ende (7) des Bügels (1) einliegt, wobei das zweite Ende (7) des Bügels (1) mit einem in der Bügelebene liegenden Mittelsteg (19) und an den beiden Seiten mit je einer Ausnehmung (17) versehen ist, und wobei der Einliegebereich (26) des Verschlußteiles (5) mit den Ausnehmungen (17) entsprechenden Seitenstegen und einer dem Mittelsteg (19) entsprechenden Längsnut (23) versehen ist, dadurch gekennzeichnet, daß das zweite Ende (7) des Bügels (1) nach innen abgeschrägt ist, und daß der Einliegebereich des Verschlußteiles (5) eine dem Mittelsteg (19) entsprechende schräge Längsnut (23) und den Ausnehmungen entsprechende Endhaken (18) aufweist, die durch eine Quernut (24) vom Rest des Verschlußteiles (5) getrennt sind, wobei in unbelastetem Zustand zwischen dem zweiten Ende (7) des Bügels (1) und dem Einliegebereich (26) des Verschlußteiles (5) ausreichend Spiel ist, um das Verschwenken des Verschlußteiles (5) sicherzustellen.

2. Karabinerhaken nach Anspruch 1, dadurch gekennzeichnet, daß der Karabinerhaken eine annähernd trapezförmige Form aufweist, in der der Verschlußteil (5) einen Seitenschenkel darstellt, wobei das erste Bügelende (6) vom Grundschenkel (4) hochgebogen und das zweite Bügelende (7) vom Deckschenkel (3) heruntergebogen ist.

3. Karabinerhaken nach Anspruch 2, dadurch gekennzeichnet, daß der Grundschenkel (4) und der Deckschenkel (3) jeweils ins Bügelinnere ausgebogen sind.

4. Karabinerhaken nach Anspruch 2, dadurch gekennzeichnet, daß der dem Verschlußteil (5) gegenüberliegende Seitenschenkel (2) in der Bügelebene verbreitert und gegebenenfalls abgeflacht ist.

## Claims

1. A carabiner hook comprising a loop (1) having an insertion opening and a closure member (5) which extends over the opening and which is mounted pivotably inwardly against the force of a return spring at a first end (6) of the loop (1) and lies in the second end (7) of the loop (1), wherein the second end (7) of the loop (1) is provided with a central web (19) disposed in the plane of the loop and is provided at both sides with a respective recess (17), and wherein the inlay region (26) of the closure member (5) is provided with side webs corresponding to the recesses (17) and a longitudinal groove (23) corresponding to the central web (19), characterised in that the second end (7) of the loop (1) is bevelled inwardly and that the inlay region of the closure member (5) has an inclined longitudinal groove (23) corresponding to the central web (19) and end hooks (18) which correspond to the recesses and which are separated from the rest of the closure member (5) by a transverse groove (24), wherein in the unloaded condition there is sufficient clearance between the second end (7) of the loop (1) and the inlay region (26) of the closure member (5) to ensure pivotal movement of the closure member (5).

2. A carabiner hook according to claim 1 characterised in that the carabiner hook is of an approximately trapezoidal shape in which the closure member (5) represents a side limb, wherein the first end (6) of the loop is bent up from the bottom limb (4) and the second end (7) of the loop is bent down from the top limb (3).

3. A carabiner hook according to claim 2 characterised in that the bottom limb (4) and the top limb (3) are each curved into the interior of the loop.

4. A carabiner hook according to claim 2 characterised in that the side limb (2) which is opposite to the closure member (5) is widened in the plane of the loop and possibly flattened.

## Revendications

1. Mousqueton avec un étrier (1) présentant une ouverture d'insertion et avec un élément de fermeture (5) chevauchant l'ouverture qui est disposé de manière pivotante vers l'intérieur contre un ressort de rappel sur une première extrémité (6) de l'étrier (1) et qui est inséré dans la seconde extrémité (7) de l'étrier (1), la seconde extrémité (7) de l'étrier (1) étant munie d'un pont (19) placé dans le plan de l'étrier et d'un creux (17) situé sur chacun des deux côtés, et la zone d'insertion (26) de l'élément de fermeture (5) étant munie de plaquettes latérales correspondant aux creux (17) et d'une rainure longitudinale (23) correspondant au pont (19), caractérisé en ce que la seconde extrémité (7) de l'étrier (1) est biseautée vers l'intérieur, et que la zone d'insertion de l'élément de fermeture (5) présente une rainure longitudinale en biais (23) correspondant au pont (19) et des crochets terminaux (18) correspondant aux creux, qui sont séparés par une rainure transversale (24) du reste de l'élément de fermeture (5), en l'absence de charge un jeu suffisant existant entre la seconde extrémité (7) de l'étrier (1) et la zone d'insertion (26) de l'élément de fermeture (5) afin de garantir le pivotement de l'élément de fermeture (5).

2. Mousqueton selon la revendication 1, caractérisé en ce que le mousqueton présente une forme approximativement trapézoïdale dans laquelle l'élément de fermeture (5) représente une branche latérale, la première extrémité de l'étrier (6) de la branche de base (4) étant courbée vers le haut et la seconde extrémité de l'étrier (7) de la branche de sommet (3) étant courbée vers le bas.

3. Mousqueton selon la revendication 2, caractérisé en ce que la branche de base (4) et la branche de sommet (3) sont chacune pliée en dehors dans l'intérieur de l'étrier.

4. Mousqueton selon la revendication 2, caractérisé en ce que la branche latérale (2) opposée à l'élément de fermeture (5) est élargie dans le plan de l'étrier et le cas échéant aplatie.
